# EUROPEAN PATENT APPLICATION

(11) **EP 4 654 442 A1**
(43) Date of publication of application: **26.11.2025**
(21) Application number: 24909527.4
(22) Date of filing: 24.05.2024
(51) Int. Cl.: H02K 5/15, H02K 5/124, H02K 5/16, H02K 5/20, H02K 15/00

(54) **POWER ASSEMBLY AND METHOD FOR ASSEMBLING POWER ASSEMBLY**

(30) Priority: 25.12.2023 CN 202311812739
(71) Applicant: Chery Automobile Co., Ltd., Wuhu, Anhui 241006 (CN)
(72) Inventor: HAN, Yanyan, Wuhu, Anhui 241006 (CN); ZHOU, Zhiguang, Wuhu, Anhui 241006 (CN); KONG, Xiangzhou, Wuhu, Anhui 241006 (CN); YE, Yuanlong, Wuhu, Anhui 241006 (CN); GAN, Shenglin, Wuhu, Anhui 241006 (CN); DONG, Qixin, Wuhu, Anhui 241006 (CN)
(74) Representative: Klunker IP Patentanwälte PartG mbB
(86) International application number: PCT/CN2024/095298
(87) International publication number: WO 2025/138560

(57) **Abstract**

The present application provides a power assembly and a method for assembling a power assembly, the power assembly comprising: a main housing, which is provided with a first mounting hole; a rear cover, which is provided with a second mounting hole and an assembling hole, the assembling hole being used for matching with an assembling tool, so as to mount the rear cover on one side of the main housing, and a containing cavity being formed by the rear cover and the main housing; and a motor shaft, which is mounted in the containing cavity, two ends of the motor shaft in the length direction being movably inserted into the first mounting hole and the second mounting hole, respectively. By means of the described arrangement, the motor shaft can be rapidly assembled between the main housing and the rear cover by matching the assembling hole with the assembling tool, thus omitting the step of matching the assembling tool with a cover plate, and reducing the process of assembling, which facilitates improvement in the efficiency of assembling the power assembly. Also, by omitting the cover plate, the number of parts of the power assembly is reduced, and the size in the axial length of the power assembly and the weight of the power assembly are effectively reduced, leading to a more compact structure of the power assembly.

## Description

This present disclosure claims priority to Chinese application No. 202311812739.8 filed December 25, 2023 and entitled "POWER ASSEMBLY AND METHOD FOR ASSEMBLING POWER ASSEMBLY", the entire content of which is incorporated herein by reference.

### TECHNICAL FIELD

The present disclosure relates to the technical field of power system, and in particularly relates to a power assembly and a method for assembling a power assembly.

### BACKGROUND

A hybrid gearbox, as an important power assembly in a hybrid vehicle, can couple the power of the engine and the power of the drive motor together in a certain way to achieve the purpose of speed change and torque change to regulate and transfer the output power of the engine.

A common hybrid gearbox includes a main housing, a motor shaft, a motor chamber rear cover and a cover plate. The motor shaft is assembled between the main housing and the motor chamber rear cover. The cover plate is disposed on a side of the motor chamber rear cover away from the main housing, and the cover plate is equipped with an oil passage and a blocking structure. The setting of the cover plate can simplify the structure of the motor chamber rear cover.

However, in the above structure, the axial dimension and weight of the hybrid gearbox are increased, and the space occupied by the hybrid gearbox in the entire vehicle is increased, which is not conducive to reducing the dimension and weight of the entire vehicle. In addition, an assembly tooling needs to match the cover plate so as to press-fit the motor shaft into the main housing, which increases assembly steps and affects the assembly efficiency of the hybrid gearbox.

### SUMMARY

In view of the above, the present disclosure provides a power assembly and a method for assembling a power assembly to improve the assembly efficiency of the hybrid gearbox.

Specifically, the technical solutions are as follows.

In a first aspect, embodiments of the present disclosure provide a power assembly. The power assembly includes:
a main housing, having a first mounting hole;
a rear cover, having a second mounting hole and an assembly hole, wherein the assembly hole is configured to match an assembly tooling to mount the rear cover on one side of the main housing, and the main housing is enclosed by the rear cover to form an accommodation cavity; and
a motor shaft, mounted in the accommodation cavity, wherein two ends of the motor shaft in a length direction are movably inserted in the first mounting hole and the second mounting hole, respectively.

In some embodiments, the power assembly further includes a first bearing and a second bearing, where the first bearing and the second bearing are sleeved on the two lengthwise ends of the motor shaft in the length direction, respectively, the first bearing is mounted in the first mounting hole, and the second bearing is mounted in the second mounting hole.

In some embodiments, the power assembly further includes a bearing snap ring, where the main housing is provided with a snap ring groove in communication with the first mounting hole, the bearing snap ring is mounted in the snap ring groove and sleeved on one end of the motor shaft, and the bearing snap ring is adjacent to the first bearing.

In some embodiments, there are a plurality of assembly holes, and the plurality of assembly holes are distributed at intervals on the rear cover.

In some embodiments, the assembly hole is in communication with the second mounting hole, such that the assembly tooling passes through the assembly hole to abut against an end surface of the motor shaft.

In some embodiments, the power assembly further includes a blocking member, and the blocking member is configured to block the assembly hole.

In some embodiments, the blocking member is threadedly connected to the assembly hole.

In some embodiments, the motor shaft includes a sidewall and an inner cavity enclosed by the sidewall, where an branch oil passage is provided on the sidewall, an angle is formed between an extension direction of the branch oil passage and an axial direction of the motor shaft, and the branch oil passage passes through the sidewall and is in communication with the inner cavity; and
the rear cover is provided with an oil passage, and the oil passage is in communication with the inner cavity.

In a second aspect, a method for assembling a power assembly is provided. The method is applied to the power assembly described in the first aspect. The method for assembling the power assembly includes:
assembling a first end of a motor shaft into a second mounting hole of a rear cover;
inserting an assembly tooling into an assembly hole, and mounting, by the assembly tooling, a second end of the motor shaft into a first mounting hole of a main housing;
separating the assembly tooling from the rear cover; and
connecting the main housing to the rear cover.

In some embodiments, the power assembly further includes a first bearing and a second bearing;
where prior to assembling the first end of the motor shaft into the second mounting hole of the rear cover the method for assembling the power assembly further includes:
mounting the first bearing into the first mounting hole; and
mounting the second bearing into the first second hole.

In some embodiments, the power assembly further includes a bearing snap ring, where the main housing is provided with a snap ring groove in communication with the first mounting hole;
where after mounting the first bearing into the first mounting hole, the method assembling the power assembly further includes:
mounting the bearing snap ring into the snap ring groove, such that the bearing snap ring is adjacent to the first bearing.

In some embodiments, the assembly hole is in communication with the second mounting hole, and the power assembly further includes a blocking member;
where after separating the assembly tooling from the rear cover, the method assembling the power assembly further includes:
inserting the blocking member into the assembly hole.

The technical solutions according to the embodiments of the present disclosure achieve at least the following beneficial effects. The motor shaft can be quickly assembled between the main housing and the rear cover by setting an assembly hole in the rear cover and matching the assembly hole with the assembly tooling, thereby omitting the step of matching the assembly tooling with the cover plate, reducing the assembly process, and improving the assembly efficiency of the power assembly. In addition, by omitting the cover plate, the number of parts of the power assembly is reduced, the axial dimension and weight of the power assembly are effectively reduced, and the structure of the power assembly is more compact.

### BRIEF DESCRIPTION OF DRAWINGS

For clearer descriptions of the technical solutions in the embodiments of the present disclosure, the following briefly introduces the accompanying drawings in the descriptions of the embodiments. Apparently, the accompanying drawings in the following descriptions are merely some embodiments of the present disclosure, and persons of ordinary skill in the field may derive other accompanying drawings based on these accompanying drawings without creative effort.
FIG. 1 is an assembly schematic diagram of a power assembly according to an embodiment of the present disclosure;
FIG. 2 is a section view of a power assembly according to an embodiment of the present disclosure;
FIG. 3 is another section view of a power assembly according to an embodiment of the present disclosure;
FIG. 4 is a flowchart of a method for assembling a power assembly according to an embodiment of the present disclosure;
FIG. 5 is a flowchart of a method for assembling a power assembly according to another embodiment of the present disclosure; and
FIG. 6 is a flowchart of a method for assembling power assembly according to yet another embodiment of the present disclosure.

The reference numerals in the accompanying drawings are as follows:
1-main housing; 11-accommodation cavity; 12-first mounting hole; 13-snap ring groove; 2-rear cover; 21-oil passage; 22-oil inlet port; 23-second mounting hole; 24-assembly hole; 3-motor shaft; 31-inner cavity; 32-sidewall; 321-branch oil passage; 41-first bearing; 42-second bearing; 5-bearing snap ring; 6-stator; 7-rotor; 8-blocking member; 100-assembly tooling; 101-ejector pin.

Specific embodiments of the present disclosure have been shown by means of the foregoing accompanying drawings and will be described in greater detail below. These accompanying drawings and textual descriptions are not intended to limit the scope of the concepts of the present disclosure in any way, but rather to illustrate the concepts of the present disclosure for those skilled in the art by reference to particular embodiments.

### DETAILED DESCRIPTION

Hereinafter, the technical solutions in the embodiments of the present disclosure will be described clearly and completely in conjunction with the accompanying drawings. Apparently, the described embodiments are some of the embodiments of the present disclosure but not all of the embodiments. Based on the embodiments of the present disclosure, all other embodiments derived by a person of ordinary skill in the art without making creative effort shall fall within the scope of protection of the present disclosure.

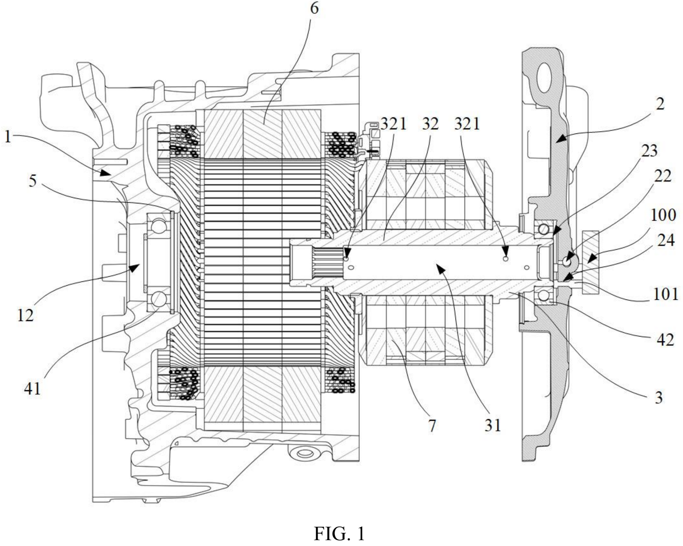

The orientation terms involved in the embodiments of the present disclosure, such as "up", "down", and "side", are generally based on the relative relationships of the orientations shown in FIG. 1, and these orientation terms are merely used to more clearly describe the structures and the relationship between the structures, but not describe an absolute orientation. When the product is placed in a different posture, the orientation may change, for example, "up" and "down" may be exchanged.

Unless otherwise defined, all technical terms used in the embodiments of the present disclosure have the same meaning as commonly understood by those of ordinary skill in the art. Some technical terms in the embodiments of the present disclosure are described below.

To make the technical solutions and advantages of the present disclosure clearer, the embodiments of the present disclosure are described in further detail below in conjunction with the accompanying drawings.

As shown in FIG. 1 to FIG. 3, an embodiment of the present disclosure provides a power assembly which includes a main housing 1, a rear cover 2, and a motor shaft 3.

The main housing 1 has a first mounting hole 12. The rear cover 2 has a second mounting hole 23 and an assembly hole 24. The assembly hole 24 is configured to match an assembly tooling 100 such that the rear cover 2 is mounted on one side of the main housing 1 and the main housing 1 is enclosed by the rear cover 2 to form an accommodation cavity 11.

The motor shaft 3 is mounted in the accommodation cavity 11, two ends of the motor shaft 3 in a length direction are movably inserted in the first mounting hole 12 and the second mounting hole 23, respectively. The rear cover 2 and the main housing 1 are mated along the length direction of the motor shaft 3 to form the accommodation cavity 11, such that the motor shaft 3 is limited in the accommodation cavity 11.

For example, the power assembly is a hybrid gearbox. In the case where the power assembly has been assembled, the first mounting hole 12 and the second mounting hole 23 are coaxially spaced along the length direction of the motor shaft 3. The first mounting hole 12 and the second mounting hole 23 may be in the shape of a circle, a rectangle or other polygons.

The power assembly further includes a stator 6 and a rotor 7 that are mounted in the accommodation cavity 11. The rotor 7 is sleeved on an outer side of the motor shaft 3, and the stator 6 is arranged to surround a periphery of the rotor 7. The motor shaft 3 is rotatable around its own central axis under the cooperation of the stator 6 and the rotor 7.

As shown in FIG. 1, the assembly hole 24 extends along a thickness direction of the rear cover 2. The assembly tooling 100 is provided with an ejector pin 101, and the ejector pin 101 can be inserted into the assembly hole 24, such that the assembly tooling 100 moves the rear cover 2 and press-fits the rear cover 2 onto an end surface of the main housing 1 to complete the assembly of the power assembly.

In the prior art, the hybrid gearbox generally includes a main housing, a motor shaft, a motor chamber rear cover, and a cover plate. The cover plate is mounted on the side of the motor chamber rear cover away from the main housing, and the cover plate is provided with an oil passage and a blocking structure. In the assembling process, the assembly tooling 100 needs to match the cover plate so as to abut against the motor shaft and move the motor shaft to mount the motor shaft in the main housing. The arrangement of the cover plate increases the axial dimension and weight of the hybrid gearbox, thereby increasing the assembly process and affecting the assembly efficiency of the hybrid gearbox.

However, in the power assembly provided in the embodiments of the present disclosure, the motor shaft 3 can be quickly assembled between the main housing 1 and the rear cover 2 by setting an assembly hole 24 in the rear cover 2 and matching the assembly hole 24 with the assembly tooling 100, thereby omitting the step of matching the assembly tooling 100 with the cover plate, reducing the assembly process, and improving the assembly efficiency of the power assembly. In addition, by omitting the cover plate, the number of parts of the power assembly is reduced, the axial dimension and weight of the power assembly are effectively reduced, and the structure of the power assembly is more compact.

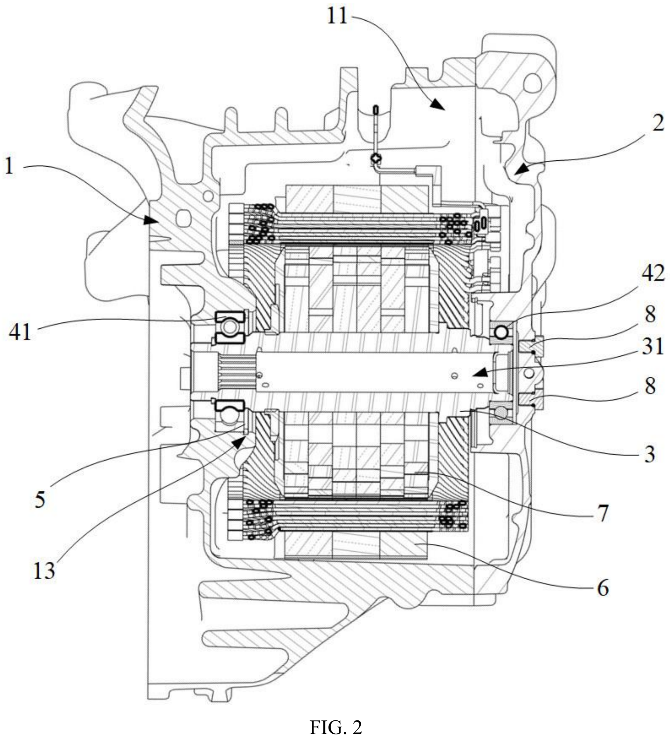

In a further embodiment, as shown in FIG. 2, the power assembly further includes a first bearing 41 and a second bearing 42. The first bearing 41 and the second bearing 42 are respectively sleeved on two ends of the motor shaft 3 in the length direction, the first bearing 41 is mounted in the first mounting hole 12, and the second bearing 42 is mounted in the second mounting hole 23.

For example, the first bearing 41 and the second bearing 42 are rolling bearings such as deep groove ball bearings, cylindrical roller bearings, needle roller bearings and they are configured to carry radial loads, support the motor shaft 3 and reduce rotational friction to ensure the normal rotation of the motor shaft 3.

For example, the first bearing 41 is in clearance fit with the main housing 1, and the second bearing 42 is in clearance fit with the rear cover 2, which can store lubricating oil can be stored and compensate for errors.

For example, the first bearing 41 is in interference fit with the motor shaft 3, and the second bearing 42 is in interference fit with the motor shaft 3, such that the connection is tighter and it is not easy for the first bearing 41 and the second bearing 42 to fall off.

Optionally, the shape and size of the first mounting hole 12 match the shape and size of the first bearing 41, respectively, and the shape and size of the second mounting hole 23 match the shape and size of the second bearing 42, respectively. For example, shapes of outer contours of the first mounting hole 12 and the second mounting hole 23 are circular, and they are the same as shapes of outer contours of the first bearing 41 and the second bearing 42. The radial dimension of the first mounting hole 12 is equal to or slightly greater than the radial dimension of the first bearing 41, and the radial dimension of the second mounting hole 23 is equal to or slightly greater than the radial dimension of the second bearing 42.

For example, in this embodiment, the assembling process of the power assembly includes: the first bearing 41 is assembled into the first mounting hole 12; the second bearing 42 is press-fit onto the motor shaft 3, and the motor shaft 3 and the second bearing 42 are integrally assembled into the second mounting hole 23; the ejector pin 101 of the assembly tooling 100 is inserted into the assembly hole 24, the rear cover 2, the motor shaft 3, and the second bearing 42 are moved as a whole, and the motor shaft 3 is assembled into the first mounting hole 12; and the rear cover 2 is connected to the main housing 1 by means of bonding, interference fit, fastener connection, or the like.

In a further embodiment, the power assembly further includes a bearing snap ring 5, the main housing 1 is provided with a snap ring groove 13 that is in communication with the first mounting hole 12, the bearing snap ring 5 is mounted in the snap ring groove 13 and sleeved on one end of the motor shaft 3, and the bearing snap ring 5 is adjacent to the first bearing 41.

For example, the bearing snap ring 5 is made of spring steel, stainless steel or the like.

For example, the snap ring groove 13 is disposed on the side of the first mounting hole 12 close to the rear cover 2, such that the bearing snap ring 5 is disposed on the side of the first bearing 41 close to the second bearing 42 and the bearing snap ring 5 abuts against the first bearing 41, as shown in FIG. 2.

By providing the bearing snap ring 5, accurate positioning of the first bearing 41 during operation can be ensured, the stability of the first bearing 41 can be improved, and excessive vibration or abrasion caused by axial movement of the first bearing 41 can be prevented, so as to avoid affecting the service life of the first bearing 41.

For example, in this embodiment, the assembling process of the power assembly includes: the first bearing 41 is assembled into the first mounting hole 12; the bearing snap ring 5 is assembled into the snap ring groove 13; the second bearing 42 is press-fit onto the motor shaft 3, and the motor shaft 3 and the second bearing 42 are integrally assembled into the second mounting hole 23; the ejector pin 101 of the assembly tooling 100 is inserted into the assembly hole 24, the rear cover 2 , the motor shaft 3 and the second bearing 42 are moved as a whole, and the motor shaft 3 is assembled into the first mounting hole 12; and the rear cover 2 is connected to the main housing 1 by means of plugging, fastener connection, or the like.

In a specific embodiment, there are a plurality of assembly holes 24 which are distributed at intervals on the rear cover 2, so as to improve connection stability between the assembly tooling 100 and the rear cover 2.

For example, there are three assembly holes 24 which are distributed at intervals around the second mounting hole 23. The assembly hole 24 may be in the shape of a circle, rectangle, triangle, or other polygons. Optionally, the shape and size of the assembly hole 24 match the shape and size of the ejector pin 101 of the assembly tooling 100.

The assembly hole 24 may be a blind hole or a through hole. For example, the assembly hole 24 is in communication with the second mounting hole 23, such that the assembly tooling 100 passes through the assembly hole 24 to abut against an end surface of the motor shaft 3.

In this embodiment, the ejector pin 101 of the assembly tooling 100 may pass through the assembly hole 24 to abut against the end surface of the motor shaft 3 such that the motor shaft 3 is directly press-fit into the first mounting hole 12, which is conducive to improving the tightness, stability and reliability of the connection between the motor shaft 3 and the main housing 1, reducing the assembly difficulty, and improving the assembly efficiency.

In a further embodiment, the power assembly further includes a blocking member 8 which is configured to block the assembly hole 24.

Specifically, the blocking member 8 is configured to block the assembly hole 24 after the assembly of the motor shaft 3 is completed so as to improve the airtightness of the power assembly and prevent lubricating oil in the accommodation cavity 11 from leaking through the assembly hole 24.

For example, the shape and size of the blocking member 8 match the shape and size of the assembly hole 24, such that the blocking member 8 shown in FIG. 2 can be tightly inserted into the assembly hole 24 to be securely connected to the rear cover 2.

The blocking member 8 is connected to the assembly hole 24 by means of bonding, welding, interference fit, or the like.

In an optional embodiment, the blocking member 8 is threadedly connected to the assembly hole 24.

Specifically, the blocking member 8 includes a screw nut portion and a screw body portion that are connected to each other, external threads are provided on the outer wall of the screw body portion, and internal threads matching the external threads are provided in the assembly hole 24. Under the engagement of the external threads and the internal threads, the screw body portion is screwed into the assembly hole 24 until the screw nut portion abuts against the side surface of the rear cover 2 facing away from the accommodation cavity 11, thereby completing the blocking of the assembly hole 24 by the blocking member 8.

It is understandable that in the case where there are a plurality of assembly holes 24, there are also a plurality of blocking members 8, and each assembly hole 24 is provided with one blocking member 8.

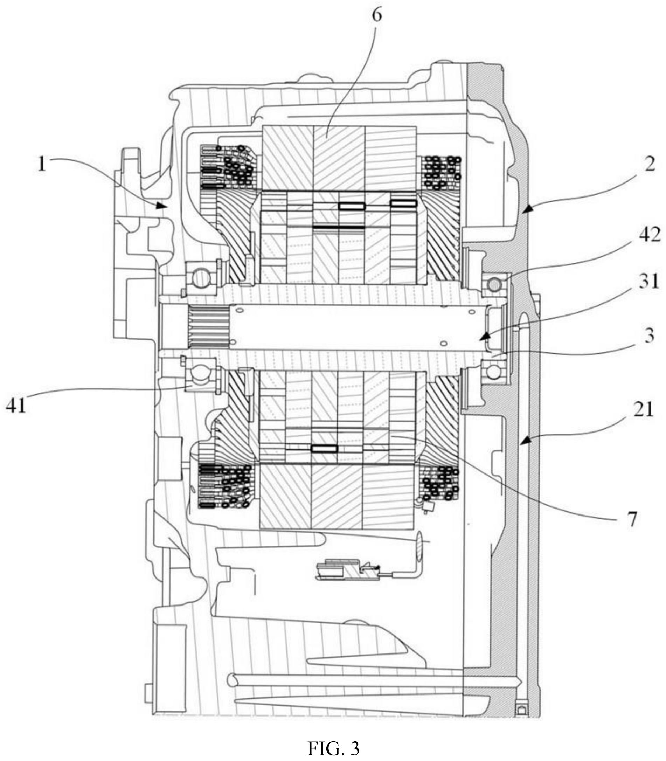

On the basis of any of the above embodiments, the motor shaft 3 includes a sidewall 32 and an inner cavity 31 enclosed by the sidewall 32. The sidewall 32 is provided with an branch oil passage 321, an angle is formed between the extension direction of the branch oil passage 321 and the axial direction of the motor shaft 3, and the branch oil passage 321 passes through the sidewall 32 and is in communication with the inner cavity 31. As shown in FIG. 3, the rear cover 2 is provided with an oil passage 21, and the oil passage 21 is in communication with the inner cavity 31.

The inner cavity 31 extends along the axial direction of the motor shaft 3, and there is one or more branch oil passages 321. An oil outlet end of at least one branch oil passage 321 leads to the accommodation cavity 11. The branch oil passage 321 may extend along the radial direction of the motor shaft 3 or extend in a direction inclined to the axial direction of the motor shaft 3.

For example, the rear cover 2 is provided with an oil inlet port 22, and the lubricating oil can enter the oil passage 21 through the oil inlet port 22 and flow into the inner chamber 31. During the rotation and throwing process of the motor shaft 3, the lubricating oil in the inner chamber 31 flows out through the branch oil passage 321 under the action of centrifugal force, and sprays on the surfaces of components such as the bearings, the stator 6, and the rotor 7 to cool and lubricate the components.

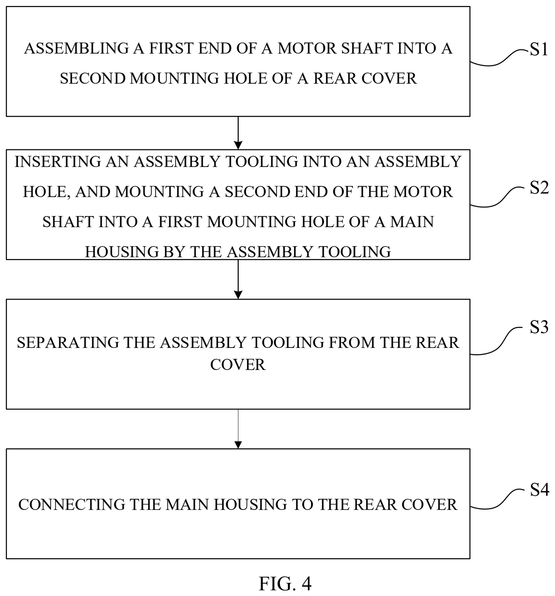

An embodiment of the present disclosure further provides a method for assembling the power assembly, which is applicable to the power assembly provided in any of the above embodiments. As shown in FIG. 4, the method for assembling the power assembly includes following steps.

In S1, a first end of a motor shaft 3 is assembled into a second mounting hole 23 of a rear cover 2.

In S2, an assembly tooling 100 is inserted into an assembly hole 24, and a second end of the motor shaft 3 is mounted into a first mounting hole 12 of a main housing 1 by the assembly tooling 100.

In S3, the assembly tooling 100 is separated from the rear cover 2.

In S4, the main housing 1 is connected to the rear cover 2.

For example, the assembly tooling 100 is provided with an ejector pin 101.In step S2, the ejector pin 101 is inserted into the assembly hole 24, such that the rear cover 2 is moved and press-fit to an end surface of the main housing 1. In step S3, the assembly tooling 100 is separated from the rear cover 2 by removing the ejector pin 101 from the assembly hole 24.

It is understandable that the first end and the second end of the motor shaft 3 are two ends of the motor shaft 3 in the length direction.

For example, in step S4, the main housing 1 and the rear cover 2 may be connected by means of bonding, interference fit, fastener connection, or the like.

In the prior art, the hybrid gearbox generally includes a main housing, a motor shaft, a motor chamber rear cover, and a cover plate. The cover plate is mounted on the side of the motor chamber rear cover away from the main housing, and the cover plate is provided with an oil passage and a blocking structure. In the assembling process, the assembly tooling 100 needs to match the cover plate so as to abut against the motor shaft and move the motor shaft to mount the motor shaft in the main housing. The arrangement of the cover plate increases the axial dimension and weight of the hybrid gearbox, thereby increasing the assembly process, and affecting the assembly efficiency of the hybrid gearbox.

However, in the power assembly provided in the embodiments of the present disclosure, the motor shaft 3 can be quickly assembled between the main housing 1 and the rear cover 2 by matching the assembly hole 24 with the assembly tooling 100, thereby omitting the step of matching the assembly tooling 100 with the cover plate, reducing the assembly process, and improving the assembly efficiency of the power assembly. In addition, by omitting the cover plate, the number of parts of the power assembly is reduced, the axial dimension and weight of the power assembly are effectively reduced, and the structure of the power assembly is more compact.

In a further embodiment, the power assembly further includes a first bearing 41 and a second bearing 42. The first bearing 41 and the second bearing 42 are respectively sleeved on the two ends of the motor shaft 3 in the length direction for carrying radial loads, so as to support the motor shaft 3 and reduce rotational friction to ensure the normal rotation of the motor shaft 3.

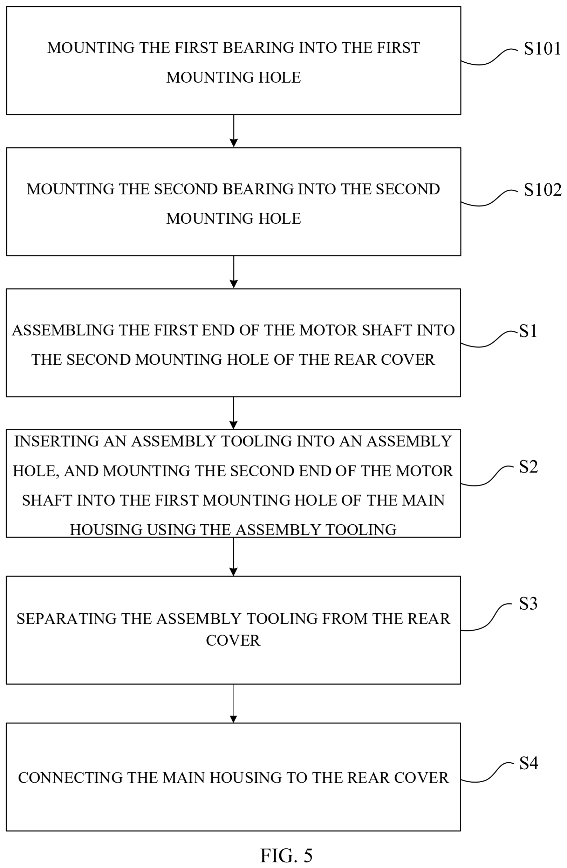

As shown in FIG. 5, before step S1 of assembling the first end of the motor shaft 3 into the second mounting hole 23 of the rear cover 2, the method for assembling the power assembly further includes the following steps.

In S101, the first bearing 41 is mounted into the first mounting hole 12.

In S102, the second bearing 42 is mounted into the second mounting hole 23.

For example, the first bearing 41 is in clearance fit with the main housing 1, and the second bearing 42 is in clearance fit with the rear cover 2, which can store lubricating oil and compensate for errors.

For example, the first bearing 41 is in interference fit with the motor shaft 3, and the second bearing 42 is in interference fit with the motor shaft 3, such that the connection is tighter and it is not easy for the first bearing 41 and the second bearing 42 to fall off.

It is understandable that the execution sequence of step S101 and step S102 may be that step S101 is executed prior to step S102, or step S102 is executed prior to step S101.

In a further embodiment, the power assembly further includes a bearing snap ring 5, and the main housing 1 is provided with a snap ring groove 13 that is in communication with the first mounting hole 12. After step S101 of mounting the first bearing 41 into the first mounting hole 12, the method for assembling the power assembly further includes the following step.

In S1011, the bearing snap ring 5 is mounted into in the snap ring groove 13, such that the bearing snap ring 5 is adjacent to the first bearing 41.

The bearing snap ring 5 is configured to ensure accurate positioning of the first bearing 41 during operation, improve the stability of the first bearing 41, and prevent excessive vibration or abrasion caused by axial movement of the first bearing 41, so as to avoid affecting the service life of the first bearing 41d.

In an embodiment, the assembly hole 24 is in communication with the second mounting hole 23, and the power assembly further includes the blocking member 8. After the assembly tooling 100 is separated from the rear cover 2 in step S3, the method for assembling the power assembly further includes the following step.

In S301, the blocking member 8 is inserted into the assembly hole 24.

In step S301, the blocking member 8 is configured to block the assembly hole 24 after the assembly of the motor shaft 3 is completed, so as to improve the airtightness of the power assembly and prevent the lubricating oil in the accommodation cavity 11 from leaking through the assembly hole 24.

In an embodiment, the blocking member 8 is threadedly connected to the assembly hole 24.

Specifically, the blocking member 8 includes a screw nut portion and a screw body portion that are connected to each other, external threads are provided on the outer wall of the screw body portion, and internal threads matching the external threads are provided in the assembly hole 24. Under the engagement of the external threads and the internal threads, the screw body portion is screwed into the assembly hole 24 until the screw nut portion abuts against the side surface of the rear cover 2 facing away from the accommodation cavity 11, thereby completing the blocking of the assembly hole 24 by the blocking member 8.

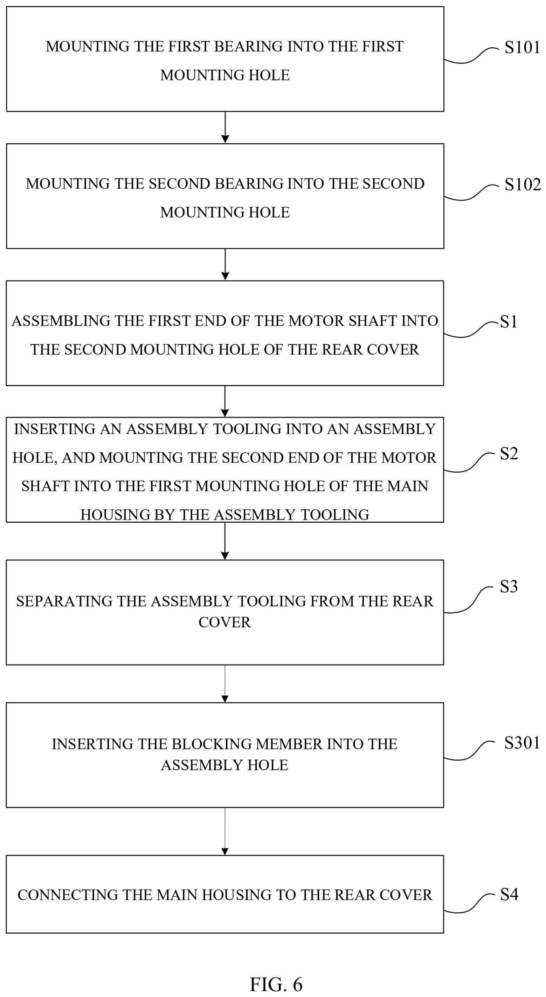

As shown in FIG. 6, in an embodiment, the method for assembling the power assembly includes the following steps.

In S101, a first bearing 41 is mounted into a first mounting hole 12.

In S102, a second bearing 42 is mounted into a second mounting hole 23.

In S1, a first end of a motor shaft 3 is assembled into the second mounting hole 23 of the rear cover 2.

In S2, an assembly tooling 100 is inserted into an assembly hole 24, and a second end of the motor shaft 3 is mounted into the first mounting hole 12 of the rear cover 2 by the assembly tooling 100.

In S3, the assembly tooling 100 is separated from the rear cover 2.

In S301, a blocking member 8 is inserted into the assembly hole 24.

In S4, the main housing 1 is connected to the rear cover 2.

In the present disclosure, the terms "first" and "second" are used for descriptive purposes only and cannot be construed as indicating or implying any relative importance. The term "a plurality of" means two or more, unless otherwise expressly defined.

In the present disclosure, unless otherwise expressly specified and defined, the terms "mount", "connect with", "connect to", "secured" and the like shall be understood broadly. For example, a connection may be a fixed connection, a detachable connection, or an integral connection. The connection may be a direct connection or an indirect connection through an intermediate medium, and the connection may be a connection within two elements or an interactive relationship between two elements, unless otherwise expressly defined. One of ordinary skill in the art may understand the specific meaning of the above terms in the present disclosure based on specific circumstances.

Other embodiments of the present disclosure will be readily available to those of skill in the art upon consideration of the specification and practice of the present disclosure as disclosed herein. The present disclosure is intended to cover any variations, uses, or adaptations of the present disclosure that follow the general principles of the present disclosure and include common knowledge or conventional technical means in the art not disclosed herein. The specification and embodiments are to be considered exemplary only.

It is understandable that the present disclosure is not limited to the above specific structures that have been shown in the accompanying drawings, and various modifications and variations may be made within the spirit and principle of the present disclosure. The scope of the present disclosure is limited by the appended claims.

## Claims

1. A power assembly, comprising:
a main housing (1), having a first mounting hole (12);
a rear cover (2), having a second mounting hole (23) and an assembly hole (24), wherein the assembly hole (24) is configured to match an assembly tooling (100) to mount the rear cover (2) on one side of the main housing (1), and the main housing (1) is enclosed by the rear cover (2) to form an accommodation cavity (11); and
a motor shaft (3), mounted in the accommodation cavity (11), wherein two ends of the motor shaft (3) in a length direction are movably inserted in the first mounting hole (12) and the second mounting hole (23), respectively.

2. The power assembly according to claim 1, wherein the power assembly further comprises a first bearing (41) and a second bearing (42), and wherein the first bearing (41) and the second bearing (42) are sleeved on the two ends of the motor shaft (3) in the length direction, respectively, the first bearing (41) is mounted in the first mounting hole (12), and the second bearing (42) is mounted in the second mounting hole (23).

3. The power assembly according to claim 2, wherein the power assembly further comprises a bearing snap ring (5), and wherein the main housing (1) is provided with a snap ring groove (13) in communication with the first mounting hole (12), the bearing snap ring (5) is mounted in the snap ring groove (13) and sleeved on one end of the motor shaft (3), and the bearing snap ring (5) is adjacent to the first bearing (41).

4. The power assembly according to any one of claims 1 to 3, wherein there are a plurality of assembly holes (24)and the plurality of assembly holes (24) are distributed at intervals on the rear cover (2).

5. The power assembly according to any one of claims 1 to 4, wherein the assembly hole (24) is in communication with the second mounting hole (23), such that the assembly tooling (100) passes through the assembly hole (24) to abut against an end surface of the motor shaft (3).

6. The power assembly according to claim 5, wherein the power assembly further comprises a blocking member (8), and the blocking member (8) is configured to block the assembly hole (24).

7. The power assembly according to claim 6, wherein the blocking member (8) is threadedly connected to the assembly hole (24).

8. The power assembly according to any one of claims 1 to 7, wherein the motor shaft (3) comprises a sidewall (32) and an inner cavity (31) enclosed by the sidewall (32), wherein an branch oil passage (321) is provided on the sidewall (32), an angle is formed between an extension direction of the branch oil passage (321) and an axial direction of the motor shaft (3), and the branch oil passage (321) passes through the sidewall (32) and is in communication with the inner cavity (31); and
the rear cover (2) is provided with an oil passage (21), and the oil passage (21) is in communication with the inner cavity (31).

9. A method for assembling a power assembly, applied to the power assembly according to any one of claims 1 to 8, the method for assembling the power assembly comprising:
assembling a first end of a motor shaft (3) into a second mounting hole (23) of a rear cover (2);
inserting an assembly tooling (100) into an assembly hole (24), and mounting, by the assembly tooling (100), a second end of the motor shaft (3) into a first mounting hole (12) of a main housing (1);
separating the assembly tooling (100) from the rear cover (2); and
connecting the main housing (1) to the rear cover (2).

10. The method for assembling the power assembly according to claim 9, wherein the power assembly further comprises a first bearing (41) and a second bearing (42);
wherein prior to assembling the first end of the motor shaft (3) into the second mounting hole (23) of the rear cover (2), the method for assembling the power assembly further comprises:
mounting the first bearing (41) into the first mounting hole (12); and
mounting the second bearing (42) into the first second mounting hole (23).

11. The method for assembling the power assembly according to claim 10, wherein the power assembly further comprises a bearing snap ring (5), and the main housing (1) is provided with a snap ring groove (13) in communication with the first mounting hole (12);
wherein after mounting the first bearing (41) into the first mounting hole (12), the method assembling the power assembly further comprises:
mounting the bearing snap ring (5) into the snap ring groove (13), such that the bearing snap ring (5) is adjacent to the first bearing (41).

12. The method for assembling the power assembly according to any one of claims 9 to 11, wherein the assembly hole (24) is in communication with the second mounting hole (23), and the power assembly further comprises a blocking member (8);
wherein after separating the assembly tooling (100) from the rear cover (2), the method assembling the power assembly further comprises:
inserting the blocking member (8) into the assembly hole (24).
